(19) Europäisches Patentamt
European Patent Office
Office européen des brevets

(11) **EP 2 862 158 B1**

(12) **EUROPEAN PATENT SPECIFICATION**

(45) Date of publication and mention
of the grant of the patent:
**09.12.2020 Bulletin 2020/50**

(21) Application number: **13803923.5**

(22) Date of filing: **12.06.2013**

(51) Int Cl.:
*G08G 1/16* (2006.01)          *B60W 30/16* (2020.01)
*B61L 23/34* (2006.01)          *G05D 1/02* (2020.01)

(86) International application number:
**PCT/SE2013/050672**

(87) International publication number:
**WO 2013/187834 (19.12.2013 Gazette 2013/51)**

(54) **SYSTEM AND METHOD FOR REGULATION OF VEHICLES IN VEHICLE TRAINS**

VORRICHTUNG UND VERFAHREN ZUR STEUERUNG VON FAHRZEUGEN IN KOLONNEN

SYSTÈME ET PROCÉDÉ DE RÉGULATION DE VÉHICULES DANS DES TRAINS DE VÉHICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.06.2012 SE 1250629**

(43) Date of publication of application:
**22.04.2015 Bulletin 2015/17**

(73) Proprietor: **Scania CV AB**
**151 87 Södertälje (SE)**

(72) Inventors:
• **NILSSON, Sanna**
**S-783 34 Säter (SE)**
• **PETTERSSON, Hanna**
**S-713 92 Gyttorp (SE)**
• **AL ALAM, Assad**
**S-121 31 Enskededalen (SE)**

• **PETTERSSON, Henrik**
**S-141 73 Segeltorp (SE)**
• **KEMPPAINEN, Josefin**
**S-126 35 Hägersten (SE)**

(74) Representative: **Scania CV AB**
**Patents, GP 117kv**
**151 87 Södertälje (SE)**

(56) References cited:
**EP-A2- 0 263 262          EP-A2- 0 762 364
WO-A1-2009/072965     WO-A1-2012/014041
WO-A1-2012/020297     DE-A1- 10 348 635
JP-A- 2011 250 021        US-A1- 2007 233 337**

• **NAGA VISHNUKANTH IRUKULAPATI: 'Sensor
Fusion for Vehicular Networks' MASTER THESIS
IN COMMUNICATION ENGINEERING,
DEPARTMENT OF SIGNAIS & SYSTEMS 2011,
CHALMERS UNIVERSITY OF TECHNOLOGY,
XP055181776**

**Description**

Field of the invention

The present invention relates to techniques for vehicle trains and in particular to a system and a method for regulating vehicles in a vehicle train according to the preambles of the independent claims.

Background to the invention

The already high traffic volume on Europe's major roads is expected to increase still further. The energy required for carrying freight on these roads is also enormous and growing. A possible contribution to solving these problems is to have trucks travel close together in so-called vehicle trains ("platoons"). Travelling close together in a vehicle train considerably lowers the air resistance to trucks, reduces their energy requirements and uses the transport system more efficiently. Vehicle train means here a number of vehicles travelling with close spacing between them and as a unit. Studies have shown that the fuel consumption of a train's leading vehicle may be reduced by 2-10% and that of the following vehicle by 15-20%, as compared with a lone vehicle. These figures are based on the distance between the trucks being 8-16 metres and on travelling at 80 km/h. The lower fuel consumption means a corresponding reduction in $CO_2$ emissions.

These well-known facts are currently already being put to advantage by drivers, with consequently lowered traffic safety. A fundamental issue concerning vehicle trains is how to reduce the time gap between vehicles from a recommended 3 seconds to between 0.5 and 1 second without affecting traffic safety. The recommended time gap is currently based on

- driver reaction time
- delays in vehicle brake systems
- vehicle stopping distances

Driver reaction time can be eliminated by using distance sensors and cameras, ACC (adaptive cruise control) and LKA (lane keeping assistance) being examples of techniques already employed today. There is however a limitation in that distance sensors and cameras need a clear view of the target, making it difficult to detect what is happening more than a couple of vehicles ahead in the queue. A further limitation is that they cannot react proactively, i.e. react to occurrences which have had no marked effect on the pace of traffic.

A development of IEEE standard 802.11 for WLAN (wireless local area networks) called 802.11p allows wireless transfer of information between vehicles, and between vehicles and infrastructures. Various kinds of information may be sent to and from the vehicles, e.g. vehicle parameters and strategies. A vehicle ahead in a train may thus for example

- send information about its own state, i.e. weight, speed, power output, location etc.,
- send information about forms of action which affect nearby traffic, e.g. braking,
- acting as a probe for vehicles behind by passing reports about traffic occurrences rearwards in the vehicle train.

This access to information makes it possible to create new functions, e.g. for helping drivers to drive more efficiently and more safely. The development of communication techniques has made it possible to design trucks and infrastructures which support the use of vehicle trains. A vehicle train can operate as a unit, thereby damping fluctuations in the train caused by speed changes and consequently allowing closer spacing and better overall traffic flow.

The creation of vehicle trains does however give rise to other kinds of problems. At present, not all vehicles are equipped for wireless communication, which means that a vehicle train may include vehicles which cannot communicate wirelessly. This may contribute to problems in regulating the train's vehicles in that not all of the necessary information is available.

"String-stable CACC design and experimental validation", R.P.A. Vugts, Master's Thesis, Technische Universitet Eindhoven, Department of Mechanical Engineering, Control Systems Technology Group, describes the problem of one or more unknown vehicles moving into a vehicle train. However, the examination work does not cover these situations, as it confines itself to cases where communication with a vehicle immediately ahead is possible.

WO-2012/020297-A1 describes a control device and control method for regulation of vehicles. When a vehicle moves in between a host vehicle and a vehicle in front, the time between these two vehicles will be greater than the predetermined time. Radar is then used to detect the vehicle, and the time between the vehicles is set on the basis of the result of the detection.

The documents JP 2011 250021 A and EP 0 762 364 A2 also disclose methods for regulating a vehicle train.

For a vehicle train to work well the speed of the other vehicles has to be obtained via wireless communication.

When a vehicle with no wireless communication facility moves into the train, it is not possible to obtain information wirelessly about its speed. Measures then have to be adopted to ensure correct regulation of the vehicles.

The object of the invention is therefore to propose an improved system which facilitates the regulation of vehicles which communicate in different ways.

Summary of the invention

In one aspect, the object described above is at least partly achieved by a system for regulating vehicles in a vehicle train according to the first independent claim. The train comprises a leader vehicle and at least one further vehicle adapted to communicating via wireless communication. The system further comprises a processor unit adapted to receiving data related to one or more vehicle parameters for a vehicle in the train or within an area around the train, and to analysing said data according to predetermined criteria.

The processor unit is further adapted to placing said vehicles in one of a predetermined number of categories based on the result of said analysis, each of which categories has rules for how at least one vehicle in the train is to be regulated on the basis of the categorisation, and to generating at least one control signal which indicates how one or more vehicles in the train is to be regulated on the basis of said categorisation. The processor unit is then adapted to sending the control signal to one or more control units on board one or more of the train's vehicles, which are then regulated accordingly.

The invention facilitates the regulation of vehicles in a vehicle train. The information about which category vehicles belong to may be used by a regulator which can immediately adjust its calculation of control parameters for a vehicle in the train in accordance with how nearby vehicles are categorised. The invention facilitates the regulation so as to continually maintain a safe distance from the vehicle in front irrespective of whether it is a known or unknown vehicle. Maintaining continually the shortest possible distance from vehicles in front results in both safe regulation and reduced fuel consumption.

In a second aspect, the object described above is at least partly achieved by a method for regulating vehicles in a vehicle train which comprises a leader vehicle and at least one further vehicle adapted to communicating via wireless communication. The method comprises the steps of i) receiving data related to one or more vehicle parameters for a vehicle in the train or within an area around the train, ii) analysing said data according to predetermined criteria, iii) placing said vehicles in one of a predetermined number of categories based on the result of said analysis, each of which categories has rules for how at least one vehicle in the train is to be regulated on the basis of the categorisation, and iv) regulating at least one vehicle in the train on the basis of said categorisation.

In a third aspect, the object described above is at least partly achieved by a computer programme product comprising programme instructions for enabling a computer system to perform steps according to the method described above and according to method steps in the detailed description when the programme instructions are run on the computer system.

Preferred embodiments are described in the dependent claims and in the detailed description.

Brief description of the attached drawings

The invention is described below with reference to the attached drawings, in which:

Figure 1 is a schematic diagram of a vehicle notation herein used for a vehicle train.
Figure 2 is a block diagram of the system for regulation of vehicles in a vehicle train according to an embodiment of the invention.
Figure 3 is a block diagram of the system for regulation of vehicles in a vehicle train according to another embodiment of the invention.
Figures 4A and 4B illustrate how an unknown vehicle may be categorised according to an embodiment of the invention.
Figure 5 is a schematic diagram of how centralised control works.
Figure 6 is a schematic diagram of how decentralised control works.
Figure 7 is a schematic diagram illustrating a method for regulating vehicles in a vehicle train according to an embodiment of the invention.

Detailed description of preferred embodiments of the invention

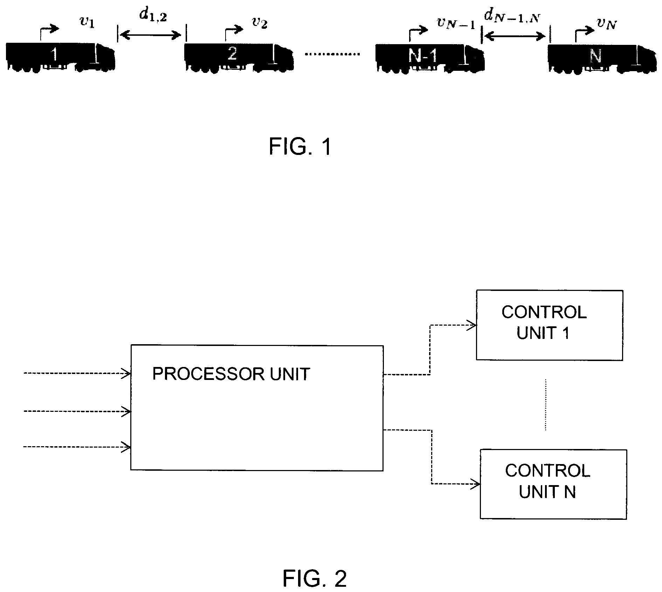

A vehicle train is defined as a number of vehicles working as a unit. The vehicles belonging to the train are each controlled automatically in the longitudinal direction and communicate with one another through a wireless network. Figure 1 is a schematic diagram of a vehicle notation herein used for a vehicle train. The host vehicle has the notation 1 and the vehicles in front the notation 2,...N. The host vehicle may also be referred to as EGO and vehicle N as the leader vehicle. These notations are local for each vehicle in the train. The relative distance and speed between vehicle 1 and vehicle 2 are referred to as $d_{1,2}$, $v_{1,2}$ etc. Vehicle 1 has the speed $v_1$ etc. The general purpose of vehicle trains is to keep the vehicles as close to one another as possible by regulating their cruise controls and brake systems in order to take advantage of positive effects such as reduced air resistance.

By vehicle-to-vehicle communication (V2V communication), information may be obtained wirelessly from nearby vehicles. To this end, the vehicles are provided with units adapted to receiving and sending information wirelessly. A further way of communicating is via vehicle-to-infrastructure communication (V2I communication), whereby vehicles can exchange information wirelessly with, for example, roadside units with built-in intelligence.

Figure 2 is a block diagram of the system for regulation of vehicles in a vehicle train according to an embodiment of the invention. The system comprises a processor unit which may for example be on board one of the train's vehicles or in an externally located unit. In one embodiment each of the train's vehicles is provided with a processor unit according to the invention. It is implicit that the system also comprises memory space connected to the processor unit, e.g. to store necessary data and instructions. The processor unit comprises also one or more processors which can execute machine code.

The processor unit is adapted to receiving data related to one or more vehicle parameters for a vehicle in the train or within an area around the train, meaning a range of the order of 0 to 2 km. The wireless communication has a range of up to about 2 km and radar has for example a range of between 50 and 200 m. If the processor unit is on board a vehicle, data may for example be obtained via a network on board. A usual network employed in vehicles is CAN (controller area network). Data on the network come from data sent wirelessly from other vehicles, and from sensors on board the host vehicle. The train's vehicles are usually equipped with a plurality of detectors which provide vehicle parameters such as the location and/or speed of the vehicles. Radar, lidar or a camera unit may for example provide information about the relative distance, the relative speed and/or the acceleration between the vehicles. The vehicles are then each provided with at least one radar unit, lidar unit and/or camera unit. GPS (global positioning system) is a satellite navigation system which gives the vehicle's location in coordinates of longitude and latitude and its speed to a GPS receiver on board. Each vehicle in the train preferably has a GPS unit. Information from the GPS unit may then be distributed to various systems on board the vehicle, e.g. via CAN, and to other vehicles via wireless communication. Information such as the engine's torque, the vehicle's weight, odometer data, direction and/or yaw rate is usually also readable from CAN. Information from CAN in one embodiment is read at a rate of 100 Hz.

Data transmitted wirelessly to the vehicle comprise not only vehicle parameters but also identification data indicating the vehicle or vehicles from which the vehicle parameters come. The processor unit is preferably adapted to using said identification data to monitor and keep track of which vehicles data come from. The wireless data take the form in Figure 2 of wireless signals represented by the broken lines rangeing the processor unit. The signals contain data packets with associated identification indicating which vehicle the packet originates from. The rate at which the signals are received by the vehicles is for example 10 Hz. In one embodiment each vehicle has a specific ID number which is directly related to it and serves to identify a data packet. Each vehicle which forms part of a train is also provided, in one embodiment, with a specific train ID, which may for example be the leader vehicle's ID number.

The processor unit is further adapted to analysing said data according to predetermined criteria, e.g. by estimation and/or sensor fusion, as will be explained below. On the basis of the result of the analysis, the vehicle is then placed in one of a predetermined number of categories which each have rules for how at least one of the train's vehicles is to be regulated on the basis of the categorisation. In one embodiment the predetermined categories comprise 1) wirelessly transmitting vehicles in the train and/or 2) wirelessly transmitting vehicles outside the train and/or 3) unknown vehicles in the train. In one embodiment said rules for a category indicate how a vehicle situated after a vehicle in the respective category is to be regulated. If a vehicle is placed in category 3), the vehicle after it in the train has in one embodiment to increase its distance from that vehicle to make it possible to achieve safe regulation. Other categories than those described above are of course also conceivable.

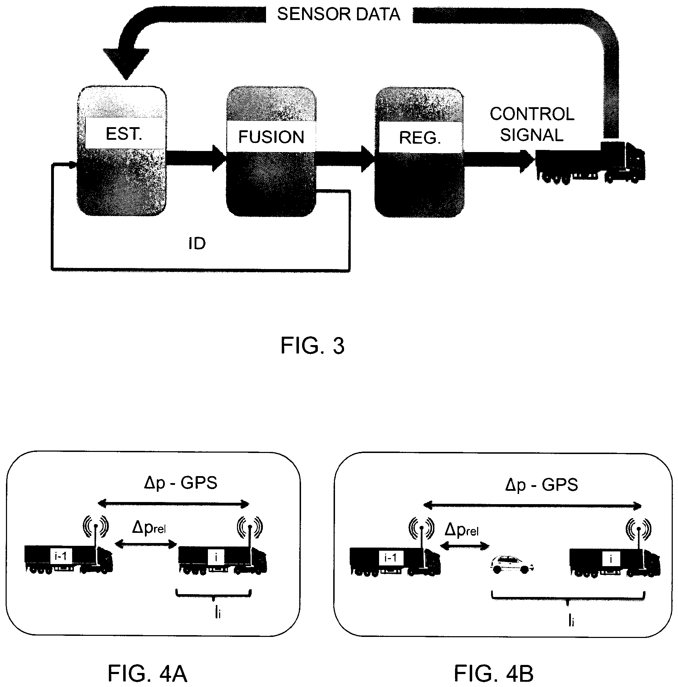

Figure 3 is a schematic diagram of a system for regulation of the vehicles in a vehicle train according to an embodiment of the invention. The processor unit comprises in this embodiment three function units, as will be explained below. This strategy is only to be regarded as an example, and other strategies are applicable within the context of the invention. The first unit, the "EST." unit, receives data from, for example, a network on board the vehicle. In one embodiment said data therefore comprise identification data indicating which vehicle said data come from. The processor unit may then be adapted to analysing the data from a vehicle by comparing identification data from received data with identification data for the vehicle train. On the basis of the result of the comparison, the vehicle is then placed in one of a predetermined number of categories. If identification data from received data match identification data from the vehicle train, the data received come from a wirelessly transmitting vehicle which is part of the train. The vehicle is then placed in category 1), i.e. wirelessly transmitting vehicle in the train. This makes it easy for the regulator to keep track of which vehicles are part of the train. If identification data from received data do not match identification data from the vehicle train, the received data come from a wirelessly transmitting vehicle which is outside the train. The vehicle is then placed in category 2), i.e. wirelessly transmitting vehicle outside the train. It is appropriate to keep track of this category, since such a vehicle will perhaps wish to move into the train, in which case the system and the regulator will already know how it is to be regulated. In one embodiment states for one or more vehicles are also estimated in the EST. unit, and check values are calculated for each state. This estimation and calculation of check values may for example involve using an extended Kalman filter, as described below. Sensor data from known sources tagged with identification data are fusioned in order to estimate for example vehicle states in terms of the location, speed and direction of the vehicles. The EST. unit therefore receives monitored raw data and verifies inter alia that they are relevant for further estimations before they go into the next two units. The processor unit is therefore adapted to categorising vehicles at least partly on the basis of the method by which said data are produced, e.g whether they are received wirelessly or not.

In the "FUSION" unit depicted in Figure 3, sensor values which are identifiable by marking, e.g. wireless data comprising identification data, are then fusioned with sensor data which are unmarked, e.g. data from radar, lidar or cameras. The fusion involves estimation of states, which in one embodiment comprise the location, speed and/or length of the train's vehicles which are to be covered by the regulation. An ID vector for all of the vehicles which are specified to be estimated is fed back in one embodiment to the EST. unit, as illustrated by "ID" in Figure 3. The ID vector comprises the identity of the vehicles which are specified to be estimated. The fusion may for example be conducted with an extended Kalman filter (EKF), as described below.

Extended Kalman filter

EKF is a filter which can handle non-linearities in models. The filtering involves a prediction step also called time update based on a physical model (1) of the vehicle, the previous information about states, and the sampling time. The vehicle model (1) depicted by way of example expresses the acceleration of vehicle i as

$$a_i = \frac{r_\omega^2}{J_\omega + m r_\omega^2 + i_t^2 i_f^2 \eta_t \eta_f J_e} \left( \frac{i_t i_f \eta_t \eta_f}{r_\omega} T_e - \frac{c_d A_a \rho_a v^2}{2} + \frac{c_d A_a \rho_a v^2}{2} \cdot \frac{f_i(d)}{100} - \right.$$

$$c_r m g \cos\alpha - m g \sin\alpha \qquad\qquad (1)$$

in which $r_w$ is the vehicle's wheel radius, $J_\omega$ the vehicle's wheel inertia, $m$ the vehicle's weight, $i_t$ the vehicle's transmission ratio of current gear, $i_f$ the vehicle's transmission ratio for the final gear, $\eta_t$ an efficiency constant for current gear, $\eta_f$ an efficiency constant for the final gear, $J_e$ the engine's moment of inertia, $T_e$ the engine torque, $c_d$ the air draught coefficient, $A_a$ the vehicle's front cross-sectional area, $\rho_a$ the air density, v the vehicle's speed, $f_i(d)$ a function for vehicle i's reduction of the air draught coefficient, $c_r$ the vehicle's rolling coefficient, g the gravitational constant and $\alpha$ the gradient of the road. The model is then discretised in order to be usable in the estimation. The description of EKF set out below uses for the sake of simplicity a general model (2) for the vehicle's movement, which may therefore be matched by a discretised variant of model (1).

A general model of a non-linear movement model in discrete time is represented by

$$\hat{x}_{k+1} = f(\hat{x}_k, u_k, \theta, v_k) \qquad\qquad (2)$$

in which $\hat{x}_k$ is the estimated state vector, $u_k$ input signals, $\theta$ model parameters and $v_k$ process noise. The time update involves predicting states (3) and the associated covariance (4) as

$$\hat{x}_{k|k-1} = f(\hat{x}_{k-1|k-1}, u_{k-1}, \theta, v_{k-1}) \qquad\qquad (3)$$

$$P_{k|k-1} = F_k P_{k|k} F_k^T + Q_k \qquad\qquad (4)$$

in which

$$F_{k-1} = \frac{\partial f}{\partial x}\Big|_{\hat{x}_{k-1|k}, u_{k-1}} \qquad\qquad (5)$$

and Q$k$is the covariance matrix for $v_k$. Thus $Q_k$ describes the model's uncertainty and may be weighted according to how well the model corresponds to reality.

The next step is to compare the predicted states with measured values for them, a step also called measurement update. This comparison involves using a model for the measured values according to

$$y_k = h(\hat{x}_k, u_k, \theta, e_k) \qquad (6)$$

in which $y_k$ represents the now pre-processed measured values in vector format and $e_k$ the measuring noise. The measurement update then involves comparing the pre-processed measured values with the estimated state vector from the time update according to

$$\varepsilon_k = y_k - h(\hat{x}_{k|k-1}) \qquad (7)$$

The covariance $S_k$ for the measured value residual $\varepsilon_k$ is calculated as

$$S_k = H_k P_{k|k-1} H_k^T + R_k \qquad (8)$$

in which $P_k$ is the covariance for states, $H_k$ is calculated as

$$H_k = \frac{\partial h}{\partial x}\Big|_{\hat{x}_{k|k-1}} \qquad (9)$$

and $R_k$ is the covariance matrix for the measuring noise $e_k$. $R_k$ is the corresponding weight matrix to $Q_k$ and is adjustable according to the uncertainty of the sensor measured values. The estimated state update $\hat{x}_k$ is then calculated as

$$\hat{x}_{k|k} = \hat{x}_{k|k-1} + K_k \varepsilon_k \qquad (10)$$

in which the Kalman amplification K is

$$K_k = P_{k|k-1} H_k^T S_k^{-1} \qquad (11)$$

The covariance matrix P for the estimated states is updated as

$$P_{k|k} = (I - K_k H_k) P_{k|k-1} \qquad (12)$$

The input signals to the filter which are used in the FUSION unit comprise the vector

$$u_k = [T_e \quad \phi \quad \alpha]^T \qquad (13)$$

in which $T_e$ (the vehicle's engine torque), $\phi$ (the vehicle's direction) and $\alpha$ (road gradient) are obtained from data via wireless communication.

The measurements therefore come from two different sources. The first source is the EST. unit, which gives an estimated location $z_p$ and speed $z_v$ for each vehicle, e.g. on the basis of sensor measurements from the host vehicle and wireless data. The second source is here radar, which provides a relative distance $z_{p_{rel}}$ and a relative speed $z_{v_{rel}}$ relative to the vehicle in front. The measurement signals to the filter represent the vector (14) which may then be expressed as

$$z_k = [z_p \quad z_v \quad z_{p_{rel}} \quad z_{v_{rel}}]^T \qquad (14)$$

The calculations in EKF may then be conducted either on the basis of a global reference system which covers all of the train's vehicles and uses GPS coordinates in the form of longitude and latitude to describe the locations of the vehicles, or a local reference system arrived at by coordinate transformation of the global coordinate system. In the local reference system the host vehicle EGO is the origin. Depending on which reference system is used, measurement equations $h(\hat{x})$ may be expressed for respective z parameters and are then used in the filtering.

In the estimation in the FUSION unit it is possible to estimate for example the vehicle's length, which may be usable data for many applications. As the length of trucks often changes, depending on how many trailers they have and how long the trailers are, matters are facilitated if the length can be calculated instead of being determined beforehand. The processor unit in one embodiment is adapted to analysing data by estimating the vehicle's length *l*, calculating a difference $\Delta l$ between the estimated length and a predetermined length of the vehicle, and comparing $\Delta l$ with a predetermined threshold value. The vehicle may then be placed in a category on the basis of the result of the comparison. If the estimated length of the vehicle train increases suddenly or at least by more than the threshold value, this indicates that an unknown vehicle has moved into the train. This unknown vehicle may then be placed in category 3), i.e. unknown vehicle in the train. The unknown vehicle then does not send data wirelessly, and a system on board a vehicle which needs to identify a vehicle ahead via radar and wireless data will receive data which originates from different vehicles. Figures 4A and 4B exemplify how an unknown vehicle can be identified by monitoring the length of vehicle i in front. The respective locations of vehicles i and i-1 are known from GPS and the relative distance $\Delta p$ - GPS between the vehicles may then be calculated. Vehicle i-1 uses radar to measure the relative distance $\Delta p_{rel}$. The FUSION unit determines whether the measurements pertain to the same vehicle. The length $l_i$ of vehicle i may then be determined by subtracting $\Delta p_{rel}$ from $\Delta p$ - GPS, as illustrated in Figure 4A. This length is then assumed to be the vehicle's actual length and may therefore be determined while it is in motion. This now predetermined length is then preferably compared continuously with new calculated values for the length $l_i$ of vehicle i. A difference may be calculated and if it is greater than a predetermined threshold value it is assumed that another vehicle has moved in between vehicles i and i-1, as illustrated in Figure 4B. The intruding vehicle is then placed in category 3) as previously explained. In one embodiment the predetermined threshold value is between 5 and 50 m.

The processor unit may also be adapted to calculating one or more check values for said estimated states to indicate how reliable the estimation of the state or states is, depending on how well data from different sources match. If the length of a vehicle suddenly increases, the check value in the form of the variance of the estimated length will also increase, indicating that an unknown vehicle has moved in between vehicles i and i-1 (see Figure 4B). A vehicle may thus be characterised on the basis of the variance of its states. In this embodiment the processor unit is therefore adapted to analysing the data by calculating the variance of the vehicle's length $l_i$, comparing the variance with a predetermined threshold value and placing the vehicle in a category on the basis of the result of the comparison. This knowledge may then be used in the regulation of the train's vehicles in order to achieve safer regulation.

In the embodiment depicted in Figure 3, the "REG." unit then receives the relative distances $d_{k,k+1}$ between the N vehicles and the speed $v_k$ of each of the train's vehicles from the FUSION unit. The categories of the vehicles are also passed on the REG. unit, which then adapts its regulating strategy according to the categorisation. In the category example described above, the REG unit takes account of the vehicles which have been placed in categories 1) and 3) and adjusts for example their speed v and the distances d between them accordingly. The processor unit is therefore adapted to generating at least one control signal which indicates how the vehicle's vehicles is to be regulated on the basis of said categorisation. In one embodiment control signals are generated by using an MPC algorithm as explained below.

MPC

MPC is an extension of an LQ regulator and is often used for solving multi-variable regulating problems. The LQ regulator minimises a cost function which is described as a linear differential equation. The general quadratic cost function is minimised with respect to the control signal *u,* e.g. the distance *d* and/or speed v, as

$$min \sum_{j=0}^{\infty} \|x(k)\|_{P_1}^2 + \|u(k)\|_{P_2}^2 \qquad (15)$$

in which $P_1$ and $P_2$ are weight matrices and are used to balance how states and the control signal are assessed. MPC may also handle limitations of the control signal and states, in which case the cost function to be analysed becomes

$$J_{H_p}\big(x(k)\big) = \sum_{j=0}^{H_p-1} \|x(k+j)\|_{P_1}^2 + \|u(k+j)\|_{P_2}^2 \qquad (16)$$

in which $H_p$ is the prediction horizon, and limitations of the spacing between the train's vehicles, their speed and/or engine torque. One embodiment introduces an integrating action in the cost function (13) whereby the difference between two consecutive control signals is minimised. This embodiment results in more uniform regulation in that the control signal is not allowed to vary too much. Output signals from the MPC comprise control signals to other regulators on board the vehicle in the form of a reference speed to the cruise control and/or a reference retardation to the brake system. The regulator will therefore serve as a superordinate regulator over the existing cruise controls and/or brake systems. In one embodiment the system comprises a conversion unit (not depicted) adapted to converting a control signal comprising torque $T_e$ to a suitable control signal for a control unit of a vehicle. The conditions within which this may take place are

$$T_e > -250, \ v_{ref} = v(k+1) \tag{17}$$

$$T_e \leq -250, \ a_{ref} = \frac{v(k+1) - v(k)}{T_s} \tag{18}$$

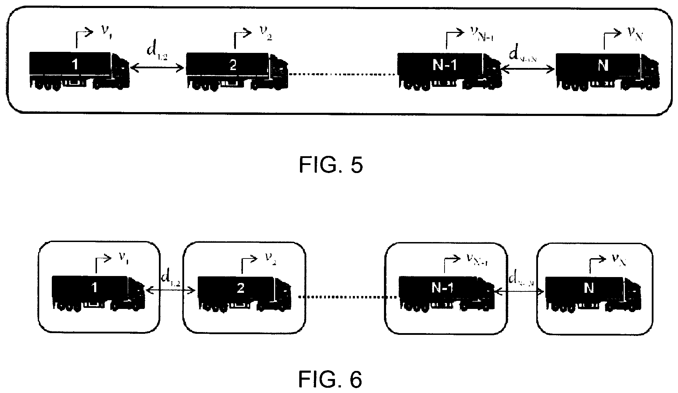

in which $v_{ref}$ is input signal to a cruise control and $a_{ref}$ input signal to a brake system. The values indicated are only to be regarded as examples, and other values are therefore applicable for the invention. Control signals are then sent on from the REG. unit to one or more control units of the vehicle or to control units of other vehicles, depending inter alia on choice of regulating strategy. Figure 5 is a schematic diagram of how centralised control works for N vehicles in a vehicle train. The boundary frame signifies that all of the vehicles have information about all the other vehicles in the train. Each vehicle then solves the same optimisation problem. In other words, each of the train's vehicles calculates an optimum control signal for each vehicle in the train. Fusion and distribution of the optimum control signals are then required to achieve a control signal which becomes the actual output signal from the regulator to each control unit of the respective vehicles. Figure 6 is a schematic diagram of how decentralised control works. The boundary frames signify that each vehicle has a description of its own vehicle system and conducts optimisation of its own control signal(s), so the control signal or signals may be used immediately after having been calculated.

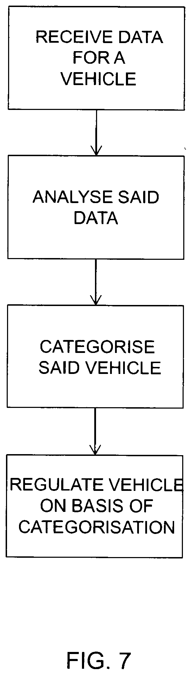

The invention relates also to a method for regulation of vehicles in a vehicle train which comprises a leader vehicle and at least one further vehicle adapted to communicating via wireless communication. The method is illustrated by the flowchart in Figure 7 and comprises a first step i) of receiving data related to one or more vehicle parameters for a vehicle in the train or within an area around the train. These data may for example be obtained via wireless communication and/or sensor systems, e.g. GPS on board the vehicle. As a second step ii), the data are analysed according to predetermined criteria. In one embodiment the data comprise identification data which indicate which vehicle said data come from, in which case the method comprises analysing said data from a vehicle by comparing identification data from received data with identification data for the vehicle train. This makes it possible to identify whether the vehicle belongs to the vehicle train or not and whether it is a transmitting vehicle, i.e. a vehicle which transmits data wirelessly. As a third step iii) the result of the analysis serves as a basis for placing the vehicles in one of a predetermined number of categories which each have rules for how at least one of the train's vehicles is to be regulated on the basis of the categorisation. The rule or rules for a category indicate for example how a vehicle situated after a vehicle in the respective category is to be regulated. In another embodiment, step ii) comprises analysing the data by estimating the vehicle's length *l*, calculating a difference *Δl* between the estimated length and a predetermined length and comparing *Δl* with a predetermined threshold value, and step iv) comprises categorising the vehicle on the basis of the result of the comparison. As a fourth step iv) at least one of the train's vehicles is regulated on the basis of the categorisation.

The invention relates also to a computer programme product comprising computer programme instructions for enabling a computer system to perform steps according to the method described above when the programme instructions are run on said computer system. In one embodiment the instructions are stored on a medium which can be read by a computer system.

## Claims

1. A system for regulating vehicles in a vehicle train which comprises a leader vehicle and at least one further vehicle adapted to communicating via wireless communication and/or via radar, camera and/or GPS (global positioning system), which system comprises a processor unit adapted to

    - receiving data related to one or more vehicle parameters for a vehicle in the train or within an area around the train, in which said data comprises identification data indicating which vehicle said data come from, the system further comprises that said processor unit is adapted to;
    - analysing said data according to predetermined criteria by comparing said identification data comprised in the the received data with identification data for the vehicle train and to fusion said received identifiable data in order to estimate one or more vehicle states for the vehicle,

- placing said vehicle in one of a predetermined number of categories based on the result of said analysis, in which said categories comprises at least 1) wirelessly transmitting vehicles in the vehicle train and 2) wirelessly transmitting vehicles outside the vehicle train 3) unknown vehicles in the vehicle train not sending data wirelessly and wherein each of which categories has rules for how at least one vehicle in the train is to be regulated on the basis of the categorisation,

- generating at least one control signal which indicates how one or more vehicles in the train are to be regulated on the basis of said categorisation and said vehicle states;

- sending the control signal to one or more control units on board one or more of the train's vehicles, which are then regulated accordingly.

2. A system according to claim 1, which comprises categorising vehicles at least partly on the basis of the method by which said data are produced.

3. A system according to any one of the above claims, in which the processor unit is adapted to analysing said data by estimating the vehicle's length $l$, calculating a difference $\Delta l$ between the estimated length and a predetermined length, comparing $\Delta l$ with a predetermined threshold value and placing the vehicle in a category on the basis of the result of the comparison.

4. A system according to any one of the above claims, in which said rules for a category indicate how a vehicle situated after a vehicle in the respective category is to be regulated.

5. A method for regulating vehicles in a vehicle train which comprises a leader vehicle and at least one further vehicle adapted to communicating via wireless communication and/or via radar, camera and/or GPS (global positioning system), which method comprises the steps of

- receiving data related to one or more vehicle parameters for a vehicle in the train or within an area around the train, in which said data comprises identification data indicating which vehicle said data come from;

- analysing said data according to predetermined criteria by comparing identification data comprised in the received data with identification data for the vehicle train and to fusion said received identifiable data in order to estimate one or more vehicle states for the vehicle,

- placing said vehicles in one of a predetermined number of categories based on the result of said analysis, in which said categories comprises at least 1) wirelessly transmitting vehicles in the vehicle train and 2) wirelessly transmitting vehicles outside the vehicle train 3) unknown vehicles in the vehicle train sending data wirelessly and wherein each of which categories has rules for how at least one vehicle in the train is to be regulated on the basis of the categorisation,

- generating at least one control signal which indicates how one or more vehicles in the train are to be regulated on the basis of said categorisation and said vehicle states;

- regulating at least one of the train's vehicles on the basis of said control signal.

6. A method according to claim 5, which comprises categorising vehicles at least partly on the basis of the method by which said data are produced.

7. A method according to any one of claims 5 to 6, comprising analysing said data by estimating the vehicle's length $l$, calculating a difference $\Delta l$ between the estimated length and a predetermined length, comparing $\Delta l$ with a predetermined threshold value and categorising the vehicle on the basis of the result of the comparison.

8. A method according to any one of claims 5 to 7, in which said rules for a category indicate how a vehicle situated after a vehicle in the respective category is to be regulated.

9. A computer programme product comprising computer programme instructions for enabling a computer system to perform steps of the method according to any one of claims 5 to 8 when the programme instructions are run on said computer system.

10. A computer programme product according to claim 9, in which the programme instructions are stored on a medium which can be read by a computer system.

**Patentansprüche**

1. System zur Steuerung von Fahrzeugen in einer Fahrzeugkolonne mit einem Führungsfahrzeug und zumindest einem weiteren Fahrzeug, die mittels Drahtloskommunikation und/oder mittels Radar, Kamera und/oder GPS (globales Positionierungssystem) zu kommunizieren vermögen, wobei das System eine Verarbeitungseinheit aufweist, die eingerichtet ist zum

   - Empfangen von Daten, die einen oder mehrere Fahrzeugparameter für ein Fahrzeug in der Kolonne oder innerhalb eines Bereichs um die Kolonne herum betreffen, wobei die Daten Identifikationsdaten umfassen, die angeben, von welchem Fahrzeug die Daten kommen, wobei das System ferner umfasst, dass die Verarbeitungseinheit eingerichtet ist zum:
   - Auswerten der Daten gemäß vorbestimmten Kriterien durch Vergleichen der in den empfangenen Daten enthaltenen Identifikationsdaten mit Identifikationsdaten für die Fahrzeugkolonne und durch Verschmelzen der empfangenen identifizierbaren Daten, um einen oder mehrere Fahrzeugzustände für das Fahrzeug abzuschätzen,
   - Einordnen des Fahrzeugs in eine aus einer vorbestimmten Anzahl von Kategorien basierend auf dem Ergebnis der Auswertung, wobei die Kategorien wenigstens umfassen 1) drahtlos sendende Fahrzeuge in der Fahrzeugkolonne und 2) drahtlos sendende Fahrzeuge außerhalb der Fahrzeugkolonne, 3) unbekannte Fahrzeuge in der Fahrzeugkolonne, die Daten nicht drahtlos senden, und wobei jede dieser Kategorien Regeln darüber hat, wie zumindest ein Fahrzeug in der Kolonne auf der Grundlage der Kategorisierung gesteuert werden soll,
   - Erzeugen wenigstens eines Steuersignals, das angibt, wie ein oder mehrere Fahrzeuge in der Kolonne auf der Grundlage der Kategorisierung und der Fahrzeugzustände gesteuert werden sollen,
   - Senden des Steuersignals an eine oder mehrere Steuereinheiten an Bord eines oder mehrerer Fahrzeuge der Kolonne, die dann entsprechend gesteuert werden.

2. System nach Anspruch 1, das ein Kategorisieren von Fahrzeugen zumindest teilweise auf der Grundlage des Verfahrens umfasst, durch welches die Daten erzeugt werden.

3. System nach einem der vorhergehenden Ansprüche, bei dem die Verarbeitungseinheit dazu eingerichtet ist, die Daten auszuwerten durch Abschätzen der Fahrzeuglänge l, Berechnen eines Unterschieds $\Delta l$ zwischen der abgeschätzten Länge und einer vorbestimmten Länge, Vergleichen von $\Delta l$ mit einem vorbestimmten Schwellenwert und Einordnen des Fahrzeugs in eine Kategorie basierend auf dem Ergebnis des Vergleichs.

4. System nach einem der vorhergehenden Ansprüche, bei dem die Regeln für eine Kategorie angeben, wie ein Fahrzeug gesteuert werden soll, welches sich hinter einem Fahrzeug der entsprechenden Kategorie befindet.

5. Verfahren zum Steuern von Fahrzeugen in einer Fahrzeugkolonne mit einem Führungsfahrzeug und zumindest einem weiteren Fahrzeug, die mittels Drahtloskommunikation und/oder mittels Radar, Kamera und/oder GPS (globales Positionierungssystem) zu kommunizieren vermögen, wobei das Verfahren die Schritte umfasst

   - Empfangen von Daten, die einen oder mehrere Fahrzeugparameter für ein Fahrzeug in der Kolonne oder innerhalb eines Bereichs um die Kolonne herum betreffen, wobei die Daten Identifikationsdaten umfassen, die angeben, von welchem Fahrzeug die Daten kommen,
   - Auswerten der Daten gemäß vorbestimmten Kriterien durch Vergleichen der in den empfangenen Daten enthaltenen Identifikationsdaten mit Identifikationsdaten für die Fahrzeugkolonne und durch Verschmelzen der empfangenen identifizierbaren Daten, um einen oder mehrere Fahrzeugzustände für das Fahrzeug abzuschätzen,
   - Einordnen des Fahrzeugs in eine aus einer vorbestimmten Anzahl von Kategorien basierend auf dem Ergebnis der Auswertung, wobei die Kategorien wenigstens umfassen 1) drahtlos sendende Fahrzeuge in der Fahrzeugkolonne und 2) drahtlos sendende Fahrzeuge außerhalb der Fahrzeugkolonne, 3) unbekannte Fahrzeuge in der Fahrzeugkolonne, die Daten nicht drahtlos senden, und wobei jede dieser Kategorien Regeln darüber hat, wie zumindest ein Fahrzeug in der Kolonne auf der Grundlage der Kategorisierung gesteuert werden soll,
   - Erzeugen wenigstens eines Steuersignals, das angibt, wie ein oder mehrere Fahrzeuge in der Kolonne auf der Grundlage der Kategorisierung und der Fahrzeugzustände gesteuert werden sollen,
   - Steuern zumindest eines der Fahrzeuge der Kolonne auf der Grundlage des Steuersignals.

6. Verfahren nach Anspruch 5, das ein Kategorisieren von Fahrzeugen zumindest teilweise auf der Grundlage des Verfahrens umfasst, durch welches die Daten erzeugt werden.

**7.** Verfahren nach einem der Ansprüche 5 bis 6, umfassend ein Auswerten der Daten durch Abschätzen der Fahrzeuglänge l, Berechnen eines Unterschieds $\Delta l$ zwischen der abgeschätzten Länge und einer vorbestimmten Länge, Vergleichen von $\Delta l$ mit einem vorbestimmten Schwellenwert und Kategorisieren des Fahrzeugs auf der Grundlage des Vergleichsergebnisses.

**8.** Verfahren nach einem der Ansprüche 5 bis 7, bei dem die Regeln für eine Kategorie angeben, wie ein Fahrzeug gesteuert werden soll, welches sich hinter einem Fahrzeug der entsprechenden Kategorie befindet.

**9.** Computerprogrammprodukt mit Computerprogrammanweisungen, um ein Computersystem dazu in die Lage zu versetzen, Schritte des Verfahrens nach einem der Ansprüche 5 bis 8 durchzuführen, wenn die Programmanweisungen auf dem Computersystem ausgeführt werden.

**10.** Computerprogrammprodukt nach Anspruch 9, bei dem die Programmanweisungen auf einem Medium gespeichert sind, das von einem Computersystem gelesen werden kann.

**Revendications**

**1.** Système pour la régulation de véhicules dans un train de véhicules qui comprend un véhicule de tête et au moins un véhicule supplémentaire adapté à la communication via une communication sans fil et/ ou via radar, caméra et/ ou GPS (système de positionnement global), lequel système comprend une unité de processeur adaptée pour

- la réception de données liées à un ou plusieurs paramètres de véhicule pour un véhicule dans le train ou dans une zone autour du train, dans lequel lesdites données comprennent des données d'identification indiquant de quel véhicule lesdites données proviennent, le système comprend en outre que ladite unité de processeur est adaptée pour ;
- l'analyse desdites données selon des critères prédéterminés par la comparaison desdites données d'identification comprises dans les données reçues avec des données d'identification pour le train de véhicules et pour fusionner lesdites données identifiables reçues afin d'estimer un ou plusieurs états de véhicules pour le véhicule,
- le placement dudit véhicule dans une parmi un nombre prédéterminé de catégories sur base du résultat de ladite analyse, dans laquelle lesdites catégories comprennent au moins 1) des véhicules transmettant sans fil dans le train de véhicules et 2) des véhicules transmettant sans fil en dehors du train de véhicules 3) des véhicules inconnus dans le train de véhicules n'envoyant pas de données sans fil
et dans lequel chacune de ces catégories a des règles pour comment au moins un véhicule dans le train doit être régulé sur la base de la catégorisation,
- la génération d'au moins un signal de commande qui indique comment un ou plusieurs véhicules dans le train doivent être régulés sur la base de ladite catégorisation et desdits états de véhicule ;
- l'envoi du signal de commande à une ou plusieurs unités de commande à bord d'un ou plusieurs des véhicules du train, qui sont ensuite régulés en conséquence.

**2.** Système selon la revendication 1, qui comprend la catégorisation de véhicules au moins en partie sur la base du procédé par lequel lesdites données sont produites.

**3.** Système selon l'une quelconque des revendications précédentes, dans lequel l'unité de processeur est adaptée pour l'analyse desdites données par l'estimation de la longueur du véhicule l, par le calcul d'une différence $\Delta l$ entre la longueur estimée et une longueur prédéterminée, la comparaison de $\Delta l$ avec une valeur seuil prédéterminée et le placement du véhicule dans une catégorie sur la base du résultat de la comparaison.

**4.** Système selon l'une quelconque des revendications précédentes, dans lequel lesdites règles pour une catégorie indiquent comment un véhicule situé après un véhicule dans la catégorie respective doit être régulé.

**5.** Procédé pour la régulation de véhicules dans un train de véhicules qui comprend un véhicule de tête et au moins un véhicule supplémentaire adapté pour la communication via une communication sans fil et/ ou via radar, caméra et/ ou GPS (système de positionnement global), lequel procédé comprend les étapes de

- la réception de données liées à un ou plusieurs paramètres de véhicule pour un véhicule dans le train ou dans une zone autour du train, dans lesquelles lesdites données comprennent des données d'identification indiquant de quel véhicule lesdites données proviennent ;

- l'analyse desdites données selon des critères prédéterminés par la comparaison des données d'identification comprises dans les données reçues avec des données d'identification pour le train de véhicules et pour fusionner lesdites données identifiables reçues afin d'estimer un ou plusieurs états de véhicules pour le véhicule,

- le placement desdits véhicules dans une parmi un nombre prédéterminé de catégories sur base du résultat de ladite analyse, dans laquelle lesdites catégories comprennent au moins 1) des véhicules transmettant sans fil dans le train de véhicules et 2) des véhicules transmettant sans fil en dehors du train de véhicules 3) des véhicules inconnus dans le train de véhicules n'envoyant pas de données sans fil

et dans lequel chacune de ces catégories a des règles pour comment au moins un véhicule dans le train doit être régulé sur la base de la catégorisation,

- la génération d'au moins un signal de commande qui indique comment un ou plusieurs véhicules dans le train doivent être régulés sur la base de ladite catégorisation et desdits états de véhicule ;

- la régulation d'au moins un des véhicules du train sur la base de ladite commande du signal.

6. Procédé selon la revendication 5, qui comprend la catégorisation de véhicules au moins en partie sur la base du procédé par lequel lesdites données sont produites.

7. Procédé selon l'une quelconque des revendications 5 à 6, comprenant l'analyse desdites données par l'estimation de la longueur du véhicule *l*, par le calcul d'une différence $\Delta l$ entre la longueur estimée et une longueur prédéterminée, la comparaison de $\Delta l$ avec une valeur seuil prédéterminée et la catégorisation du véhicule sur la base du résultat de la comparaison.

8. Procédé selon l'une quelconque des revendications 5 à 7, dans lequel lesdites règles pour une catégorie indiquent comment un véhicule situé après un véhicule dans la catégorie respective doit être régulé.

9. Produit de programme informatique comprenant des instructions de programme informatique pour permettre à un système informatique d'exécuter des étapes du procédé selon l'une quelconque des revendications 5 à 8 lorsque les instructions de programme sont exécutées sur ledit système informatique.

10. Produit de programme informatique selon la revendication 9, dans lequel les instructions de programme sont stockées sur un support qui peut être lu par un système informatique.

$v_1$     $d_{1,2}$     $v_2$     $v_{N-1}$ $d_{N-1,N}$     $v_N$

**FIG. 1**

PROCESSOR UNIT

CONTROL UNIT 1

CONTROL UNIT N

**FIG. 2**

FIG. 3

FIG. 4A

FIG. 4B

FIG. 5

FIG. 6

```
┌─────────────────┐
│  RECEIVE DATA   │
│     FOR A       │
│    VEHICLE      │
└─────────────────┘
         │
         ▼
┌─────────────────┐
│  ANALYSE SAID   │
│      DATA       │
│                 │
└─────────────────┘
         │
         ▼
┌─────────────────┐
│   CATEGORISE    │
│  SAID VEHICLE   │
│                 │
└─────────────────┘
         │
         ▼
┌─────────────────┐
│REGULATE VEHICLE │
│   ON BASIS OF   │
│ CATEGORISATION  │
└─────────────────┘
```

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012020297 A1
- JP 2011250021 A
- EP 0762364 A2

**Non-patent literature cited in the description**

- **R.P.A. VUGTS.** String-stable CACC design and experimental validation. Department of Mechanical Engineering